# EUROPÄISCHE PATENTSCHRIFT

(11) **EP 0 544 104 B1**
(45) Veröffentlichungstag und Bekanntmachung des Hinweises auf die Patenterteilung: **04.10.1995**
(21) Anmeldenummer: 92118156.6
(22) Anmeldetag: 23.10.1992
(51) Int. Cl.: B60T 15/04

(54) **Parkventil für Anhängerbremsanlagen mit Federspeicher**
Park valve for trailer brake systems with spring loaded brake cylinders
Soupape de parking pour systèmes de freinage de remorques avec ressort accumulateur

(30) Priorität: 26.11.1991 DE 4138854; 13.08.1992 DE 4226839
(43) Veröffentlichungstag der Anmeldung: 02.06.1993
(73) Patentinhaber: KNORR-BREMSE Systeme für Nutzfahrzeuge GmbH, 80809 München (DE)
(72) Erfinder: Hoppe, Volker, W-8068 Pfaffenhofen (DE); Vollmer, Otto, W-8000 München 21 (DE)

(56) Entgegenhaltungen:
- DE-A- 2 060 416
- DE-A- 2 720 632
- US-A- 3 841 714
- US-A- 4 779 433

## Beschreibung

Die Erfindung betrifft ein Parkventil nach dem Gattungsbegriff des Patentanspruches 1.

Bei Anhängerfahrzeugen sind mechanische Feststellbremsen bekannt, welche in der Regel mittels einer Kurbel oder eines Handbremshebels mit Rastierung betätigbar sind. In zunehmendem Maße werden in Anhängerbremsanlagen von Nutzfahrzeugen auch Federspeicher eingesetzt, die die Aufgabe der rein mechanischen Feststellbremseinrichtungen übernehmen. Zur Betätigung derartiger Feststell- bzw. Federspeicherbremsanlagen ist ein Parkventil vorgesehen. Die Parkventile können in Kombination mit Ventileinrichtungen verwendet werden, welche ein Notbremsventil und ein Löseventil enthalten, sie sind jedoch auch in Alleinstellung, in der Verbindung zum Federspeicherbremszylinder befindlich, verwendbar.

Die Sicherheit gegen unbefugtes Lösen von Feststellbremsen bei Anhängerbremsanlagen mit Federspeicher und Parkventil ist wesentlich geringer als bei herkömmlichen Anlagen mit rein mechanischer Betätigungseinrichtung. Die Unfallgefahr ist sehr groß, wenn durch Unberechtigte an einem abgestellten Anhänger manipuliert wird und es dabei versehentlich zu einem Lösen der Festellbremse kommt, was im allgemeinen ohne großen Kraftaufwend per Knopfdruck am Parkventil möglich ist.

Bei einem Parkventil der gattungsgemäßen Art (US-A-4,779,433) ist eine mit einem Schlüssel schließbare Sperreinrichtung für den Steuerkolben des Parkventils vorgesehen; der Schlüssel ist in eine vom Steuerkolben abziehbare Hülse einführbar, welche bei Verriegelung mittels eines durch den Schlüssel drehbaren Zapfens gegenüber einer Verriegelungsnut eines mit dem Steuerkolben verbundenen Knopfes wirkt, derart, daß nach Abziehen des Schlüssels ein Betätigen des Steuerkolbens und somit ein Lösen der Bremsen verhindert wird. Der Schlüssel als auch die Hülse sind als gesonderte Verriegelungselemente zu betrachten, welche bei gelösten Bremsen getrennt vom Parkventil in Bereitschaft gehalten werden, beispielsweise in beliebiger Position im Inneren des Fahrerhauses des Nutzfahrzeugs. Es ist jedoch nicht auszuschließen, daß sowohl der Schlüssel und/oder die zur Sperrung dienende Hülse verloren gehen oder verlegt werden. Die beim Sperren des Parkventils zusätzlich erforderliche Verwendung der Hülse, welche über den Knopf zu führen ist, stellt zudem eine zeitaufwendige Maßnahme dar.

Davon ausgehend besteht die Aufgabe der Erfindung darin, eine Sperreinrichtung der gattungsgemäßen Art so auszugestalten, daß es bei am Parkventil unverlierbar integrierten Sperrelementen möglich ist, eine Absicherung vorzunehmen, welche das unbeabsichtigte oder unbefugte Lösen der Bremsen weitgehend ausschließt.

Zur Lösung dieser Aufgabe dienen die Merkmale nach dem Kennzeichnungsteil des Patentanspruches 1.

Durch die manuell zu betätigende Sperreinrichtung ist das Lösen der Feststellbremse durch Unbefugte bzw. Personen ohne Sachkenntnis wesentlich erschwert. Die Sperreinrichtungen sind in einfacher Weise am Parkventil integrierbar und wirken direkt gegenüber dem Steuerkolben desselben, die absolut zuverlässige Funktion ist hierbei sichergestellt. Durch die Verwendung des zum Verriegeln des Steuerkolbens des Parkventils durch Federkraft selbsttätig wirkenden Sperrbolzens bedarf es zumindest zweifacher mechanischer Betätigung, d. h. Drücken am Knopf des Parkventils und gleichzeitiges manuelles Herausziehen des Sperrbolzens gegen Federkraft, um ein Einschieben des Steuerkolbens zum Zwecke des Lösens der Feststellbremse bzw. Federspeicherbremse zu ermöglichen.

Das Parkventil kann in beliebigen Ventilanordnungen oder in Alleinstellung verwendet werden; der Sperrbolzen kann an beliebiger Position des Parkventils zum Einsatz gebracht werden, d. h. nicht nur senkrecht zur Längsachse des Steuerkolbens, sonder auch kopfseitig am Gehäuse des Parkventils.

Vorteilhafte Ausgestaltungen und Weiterbildungen sind in weiteren Patentansprüchen aufgeführt.

Die Erfindung ist nachfolgend anhand von Ausführungsbeispielen unter Bezugnahme auf die beigefügte Zeichnung erläutert.
- Fig. 1: ist eine Schnittansicht eines Parkventils nach dem Stand der Technik, in baulicher Integration mit einem Löseventil und einem Notbremsventil;
- Fig. 2: ist eine der Fig. 1 vergleichbare Schnittansicht unter Darstellung eines Parkventils gemäß der Erfindung; und
- Fig. 3: ist eine der Fig. 2 vergleichbare Schnittansicht unter Darstellung eines Parkventils mit einer Sperreinrichtung gemäß einer weiteren Ausführungsform nach der Erfindung.

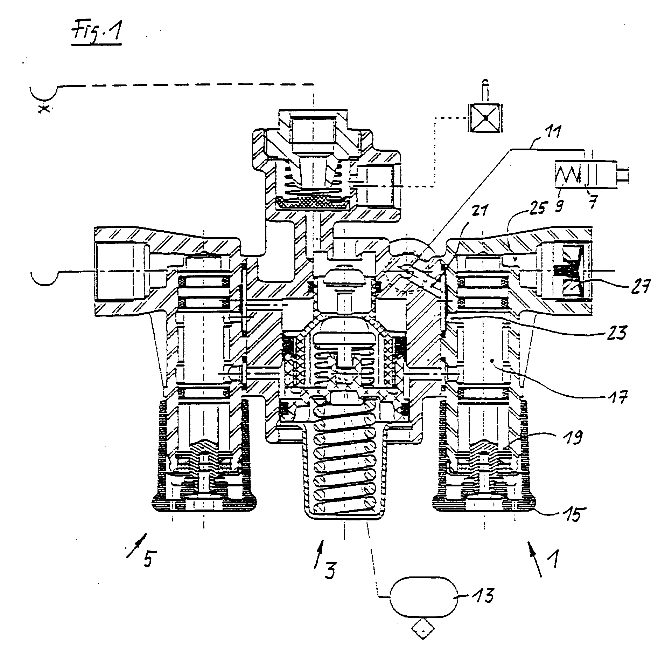

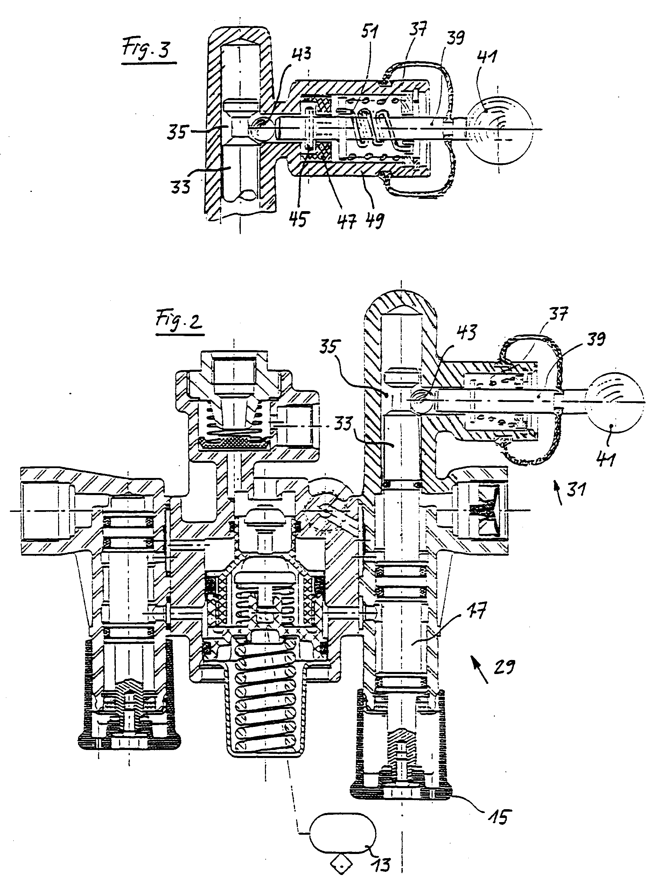

In Fig. 1 der Zeichnung ist eine an einem Anhänger eines Fahrzeugs angeordnete, an sich bekannte Gerätekombination dargestellt, welche aus einem Parkventil 1, einem Notbremsventil 3 und einem Löseventil 5 besteht. Das unter Bezugnahme auf Fig. 1. erläuterte Parkventil 1 nach dem Stand der Technik und die erfindungsgemäßen Ausgestaltungen des Parkventils, wie in den weiteren Figuren 2-3 dargestellt, sind unabhängig von der das Notbremsventil und das Löseventil mitumfassenden Gerätekombination zu sehen, da das Parkventil grundsätzlich auch mit anderen Geräten kombiniert oder als separates Ventil einsetzbar ist.

In Fig. 1. ist das Parkventil 1 gemäß dem Stand der Technik in Fahrstellung wiedergegeben, d. h. die Druckkammer 7 des mit einem Betriebsbremszylinder kombinierten Federspeicherbremszylinders 9 ist belüftet. Die Druckkammer ist mittels der dargestellten Leitung 11 und einer weiteren (im einzelnen nicht erläuterten) Leitungsverbindung. z. B. an einen Druckluftvorrat 13 angeschlossen. Die durch den Federspeicherbremszylinder gebildete Feststellbremse ist demnach gelöst.

Das Parkventil 1 wird in Bremsstellung gebracht, z. B. bei abzustellendem Anhänger, indem am Knopf 15 gemäß Darstellung in Fig. 1. nach unten gezogen wird, bis der im Parkventil befindliche Steuerkolben 17 am dargestellten Anschlag 19 anliegt. In dieser Stellung strömt die Druckluft aus der Druckkammer 7 des Federspeicherbremszylinders über die Leitung 11, den Kanal 21, die Verbindungsbohrungen 23 und 25 und das dargestellte Entlüftungsventil 27 ins Freie.

Das erneute Belüften der Druckkammer 7 beim Parkventil 1 nach dem Stand der Technik ist in einfacher Weise möglich, indem der Knopf 15 gemäß Darstellung nach oben gerichtet verschoben wird; hierdurch wird die vorstehende Entlüftung der Druckkammer 7 unterbrochen und die erneute Belüftung der Druckkammer, d. h. das Bremsenlösen wird eingeleitet.

Um das Bremsenlösen durch Unbefugte zu verhindern, ist das Parkventil in der aus Fig. 2 ersichtlichen Weise gemäß der Erfindung ausgestaltet. Das in Fig. 2. wiedergegebene Parkventil 29 weist eine integrierte Sperreinrichtung 31 auf. In Fortsetzung des Steuerkolbens 17 ist am gemäß Fig. 2 oberen Ende desselben ein Sperrkolben 33 vorgesehen, an dessen Außenumfang eine Sperrnut 35 ausgebildet ist. Gegenüber dieser Sperrnut vermag ein durch eine Feder 37 in Richtung der Sperrnut verspannbarer Sperrbolzen 39 zu wirken, welcher mittels eines an ihm ausgebildeten Knopfes 41 manuell aus der in Fig. 2 dargestellten Lage zurückziehbar ist, derart, daß der Sperrkolben 33 bzw. die an der Sperrnut ausgebildete Anschrägung die in Rastierposition befindliche Rastierkugel 43 nach rechts gerichtet zu verschieben vermag. Wenn auf den Knopf 15 gedrückt und gleichzeitig der Sperrbolzen 39 gegen die Kraft der Feder 37 nach rechts gezogen wird, ist es möglich, den Steuerkolben 17 mit Sperrkolben 33 in die in Fig. 1 dargestellte Lage zu verschieben, in welcher die Feststellbremse gelöst, also das Rangieren des Anhängers ermöglicht ist.

Eine die Sicherheit weiter erhöhende Sperreinrichtung ist in Fig. 3 der Zeichnung dargestellt. Bei dieser Weiterbildung gemäß der Erfindung ist zum Lösen der Feststellbremse, d. h. zum nach oben gerichteten Verschieben des Steuerkolbens 17 zusätzlich zum vorstehend erläuterten Betätigungsvorgang der Knopf 41 um ca. 90° zu verdrehen; durch Verdrehen des Knopfes 41 und des mit ihm verbundenen Sperrbolzens 39 kommt ein am Sperrbolzen in Querrichtung zu diesem befestigter Verreigelungsstift 45 in freie Position gegenüber einer Bajonetthülse 47, welche mit dem Gehäuse 49 der Sperreinrichtung verbunden ist. Erst nach dieser 90°-Drehung kann der Sperrbolzen 39 in vorbeschriebener Weise gegen die Kraft der Feder 37 zurückgezogen werden, um das nach oben gerichtete Verschieben des Steuerkolbens 17 mit Hilfe des Knopfes 15 zu ermöglichen. Eine sowohl gehäusefeste als auch mit dem Sperrbolzen 39 verbundene Drehfeder 51 besitzt die Neigung, den Sperrbolzen in der Rastierstellung in eine Drehposition zu bringen, in welcher die erläuterte Bajonettverriegelung sperrt; auf diese Weise ist ein selbsttätiges Lösen in jedem Falle ausgeschlossen. Darüber hinaus erfolgt die Rückstellung in die Sperrstellung unter Einwirkung der Feder37 und der Drehfeder 51 selbsttätig, was einen wesentlichen Sicherheitsfaktor darstellt.

Im Rahmen des der Erfindung eigenen allgemeinen Gedankens ist es auch möglich, die in Fig. 2 und 3 wiedergegebenen Ausführungsformen zusätzlich mit einer Schloß-Sperrung zu versehen, derart, daß die Betätigung ohne Besitz eines Schlüssels von vornherein ausgeschlossen ist.

### Bezugszeichenliste

- 1: Parkventil
- 3: Notbremsventil
- 5: Löseventil
- 7: Druckkammer
- 9: Federspeicherbremszylinder
- 11: Leitung
- 13: Druckluftvorrat
- 15: Knopf
- 17: Steuerkolben
- 19: Anschlag
- 21: Kanal
- 23: Verbindungsbohrung
- 25: Verbindungsbohrung
- 27: Entlüftungsventil
- 29: Parkventil
- 31: Sperreinrichtung
- 33: Sperrkolben
- 35: Sperrnut
- 37: Feder
- 39: Sperrbolzen
- 41: Knopf
- 43: Rastierkugel
- 45: Verriegelungsstift
- 47: Bajonetthülse
- 49: Gehäuse
- 51: Drehfeder

## Patentansprüche

1. Parkventil für Anhängerbremsanlagen mit Federspeicher, mit einer am Parkventil (29) integrierten, gegenüber dem manuell betätigbaren Steuerkolben (17) desselben wirkenden Sperreinrichtung, welche in Sperrposition ein Verschieben des Steuerkolbens und somit ein Lösen der Anhängerbremse verhindert, gekennzeichnet durch folgende Merkmale:
a) am Außenumfang des manuell betätigbaren Steuerkolbens (17) des Parkventils (29) ist eine Sperrnut (35) vorgesehen; und
b) in Querrichtung zum Steuerkolben (17) und dessen Sperrnut wirkt ein in Sperrstellung selbsttätig durch Federkraft verspannter Sperrbolzen (39), welcher manuell aus seiner Sperrlage in der Sperrnut (35) lösbar ist.

2. Parkventil nach Anspruch 1, dadurch gekennzeichnet, daß der Sperrbolzen (39) mittels eines Bajonettverschlusses (45,47) und durch eine in Richtung seiner Sperrstellung wirkende Feder (37) gegen unbeabsichtigtes Lösen gesichert ist.

3. Parkventil nach Anspruch 1 oder 2, dadurch gekennzeichnet, daß der Sperrbolzen (39) unter Einwirkung der Feder (37) und einer Drehfeder (51) selbsttätig in seine Sperrlage gegenüber dem Steuerkolben des Parkventils verlagerbar ist.

4. Parkventil nach einem der vorangehenden Ansprüche, dadurch gekennzeichnet, daß der Sperrbolzen (39) zusätzlich mit einer Schloß-Sperrung versehen ist.

## Claims

1. Park valve for trailer brake systems with a spring-loaded brake cylinder, having a blocking device which is integral with the park valve (29) and acts in respect of the manually operated control piston (17) of the same, and which, when in the blocking position, prevents displacement of the control piston and therefore release of the trailer brake, characterised by the following features:
a) a blocking groove (35) is provided on the outer circumference of the manually operated control piston (17) of the park valve (29); and
b) a blocking bolt (39), which is automatically urged into the blocking position by spring force, acts in the direction transverse to the control piston (17) and its blocking groove, and can be released manually from its blocking position in the blocking groove (35).

2. Park valve according to Claim 1, characterised in that the blocking bolt (39) is secured against inadvertent release by a bayonet catch (45, 47) and by a spring (37) acting in the direction of its blocking position.

3. Park valve according to Claim 1 or 2, characterised in that the blocking bolt (39) can be displaced automatically under the action of the spring (37) and a torsion spring (51) into its blocking position with respect to the control piston of the park valve.

4. Park valve according to any one of the preceding claims, characterised in that the blocking bolt (39) is additionally provided with a blocking device in the form of a lock.

## Revendications

1. Soupape de stationnement pour des installations de freinage de remorque, à accumulateur à ressort, comprenant un dispositif de blocage, intégré à la soupape de frein de stationnement (29), agissant par rapport au piston de commande (17) à actionnement manuel de celle-ci, qui, en position de verrouillage, empêche un coulissement du piston de commande, et ainsi un desserrage du frein de remorque, caractérisée par les particularités suivantes:
a) à la périphérie extérieure du piston de commande (17) à actionnement manuel de la soupape de frein de stationnement (29), est prévue une gorge de blocage (35); et
b) dans la direction transversale au piston de commande (17) et de sa gorge de blocage, agit une broche de blocage (39), qui est contrainte automatiquement en position de blocage par une force de ressort, et qui peut être débloquée manuellement hors de sa position de blocage dans la gorge de blocage (35).

2. Soupape de stationnement selon la revendication 1, caractérisée en ce que la broche de blocage (39) est arrêtée à l'encontre d'un déblocage non intentionnel, au moyen d'un verrouillage à baïonnette (45, 47) et d'un ressort (37) agissant dans la direction de sa position de blocage.

3. Soupape de stationnement selon la revendication 1 ou 2, caractérisée en ce que la broche de blocage (39) peut être déplacée automatiquement dans sa position de blocage par rapport au piston de commande de la soupape de stationnement, sous l'effet du ressort (37) et d'un ressort de torsion (51).

4. Soupape de stationnement selon l'une des revendications précédentes, caractérisée en ce que la broche de blocage (39) est pourvue, en supplément, d'un blocage à serrure.
